Europäisches Patentamt

(19) **European Patent Office**

**Office européen des brevets**

(11) Publication number: **0 236 657**
A2

(12) # EUROPEAN PATENT APPLICATION

(21) Application number: **86830308.2**

(22) Date of filing: **27.10.86**

(51) Int. Cl.³: **B 29 B 9/06**
**B 29 B 9/16, B 29 C 47/88**

(30) Priority: **28.10.85 IT 3162985 U**

(43) Date of publication of application:
**16.09.87 Bulletin 87/38**

(84) Designated Contracting States:
**AT BE CH DE ES FR GB GR IT LI LU NL SE**

(71) Applicant: **Sagona, Margherita**
**Via Ugo La Malfa 10126**
**I-90147 Palermo(IT)**

(72) Inventor: **Sagona, Margherita**
**Via Ugo La Malfa 10126**
**I-90147 Palermo(IT)**

(54) **Completely dry-method for the cooling and/or solidification of extruded articles, especially during the granulation of extruded strands.**

(57) It consists of an industrial procedure which allows, without water or other liquids, to cool, solidify, cut, make spaghetti, granulate or mince plastics resins, compounded or not, making use of a fluid bed of the same material in powder to cut and of compounds such as talcum, colouring matters, pigments, bioxide, calcium carbonate, carbon black, and other powder-preparates even if mixtured, which aim to "powdering" the material which will be continously extruded and in any way made in spaghetti and or cut.

Croydon Printing Company Ltd.

Industrial procedure as a substitute for hardening through water in the extrusion of and/or following possible granulation of plastics.

At the present, time after the extrusion from the extruder, the granulation of thermoplastics and of some thermohardenings is mainly made by one of the following procedure.

1) Dry granulation with a cut in the extruder's head with cooling air puffs only for materials with a low degree of VICAT as PVC.

2) Granulation made by cutting spaghetti or lasagne, previously water-cooled, through a special cutter.

3) Various Kinds of cuts in the extruder's heat with a coaxial cut or not, during which the material is cut and cooled by water streams and after that, the granules are separated from water..

4) Cuts in the extruder's head completely submerged for materials which have a particular high viscosity when melted, such as nylon or polipropilene.Also in this case the granule is pumped up with water ad after that it is separated and dryed.

All these procedures make use of a series of devices which try to cut as well as possible, that is with few agglomerate(granules which join togheter).Another series of devices try to Keep the cut material in water as little as possible and to dry it in the best way. In fact the disadvantages of the present technology are the recycling of the agglomerates and the residue of dampness in the materials.

Mainly the compounds present considerable disadvantages and need a long time to get dry and to get rid of that dampness, which is partially due to theyr hygroscopicity,but mainly to the water with which the materials are treated when they are cut.

I also remark that at the present time the more a material is compaunded, the more it absorb water, also because of some little holes inside the granule, which occur proportionally to the additioned material.

The present techonology, however, is based on the idea of hardening the thermoplastic granule supercially at same time or before it is cut. In this way once it is cut, the granule 's surface is not sticky, even if its internal part is still melting.

Our present invention consists of a new system by which we can granulate the extruded material dryly totally eliminating both water and the formation of agglomerates.We obtain that thank to a new idea that is make granules not stick to each other, "powdering" them and making them separate from each other. This "powder" may be obtained spraying (through one or more nozzles on the extruder's head) a dry material that, beside separating the different threads from each other also makes them shape in granules.

This dry material to be sprayed, mixed with air or other gaseous product may be same material with which the compounding is being made or, for other materials, thermoplastics extruded.

This system is therefore,employable with all kinds of resins even if its best profil and experted use is in the field of compounded of "master batches".Let's take as example and explanation the hypotesis of a polypropilene to be granuled holding an addition of 90% cf talcum or a polyethylene holding 0% of dioxide of rutile of titanium.

In these cases it is impossible to make them shape in spaghetti cooling them in water and then cut them,because the amount of the added materials makes the thermoplastic material fragile and the spaghetti would continously break;It is necessary,

**0236657**

therefore, to use a cut in the extruder's head. This cut is made in the presence of water which causes the above- mentioned disadvantages in the obtained granule. On the contrary with our invention on extruder's head we spray, through hozzles, air and talcum in the case of the polypropylene, air and dioxide in the case of polyethylene, obtaining perfectly cut granules, which easily may be separated from the separating material (talcum or dioxide).

The separating material may be recycled while the granules a re conveyed through a normal cooling station to a storage bin and/or to sacking machine.

In this may we will have perfectly dryed granules and without agglomerates. With our invention, in fact, both in case of a cut with mineral powder and in case of a cut with thermoplastic powder one or more layers of separating particles deposit on the just extruder thread. These separating particles do not allow agglomeration during the cutting of various threads, thus originating perfectly cut granules. These granules are strewn with a layer of particles which make the granules not join each other. Likewise we have described, our invention may be used in the extrusion not be followed by granulation, when the extruded product is therefore called "pizza", consisting of big agglomerates of melted material, and also in the extrusion of tubes.

CLAIMS

1) We claim an industrial procedure through which the melted thermoplastic obtained is air cooled, using as separating material between the different amounts (granules or pizza), mineral powder (of the same kind of the extruded material or consistent with it), also in the hypotesis in which the cooling of the extruded material is obtained with compressed air in the place of ambient air.

2) We claim what we have stated at point 1 also in the case in wich the extruded material is cut and granulated through a cut in the extruder's head, or in the hypotesis in which la sagna or spaghetti are made by cooling them not in water but in air strewning them with mineral or thermoplastic separating material at the same time or immediately afterwards, and after that, cutting these hand-made products, and also in the hypothesis in which the thermoplastic material to be granulated is obtained, apart from extruder's also through mixers pressis or other machineries fit for continous thermoplastic casting.

3) We claim what we have stated at point 1 and 2 also in the hypothesis in which the material is "powdered" in any way with any material fit for not making the various extruded amounts join togheter (be they pizzas, granules, tubes or any hand-made product traditionally water-cooled).

4) We claim the procedure through which "powdering" the thermo plastic, even in case it is in form of granules, spaghetti, la sagne or other semi-manufactured, the thermoplastic material does not become, neither in its smallest units, agglomerated. The present time we partially obtain that cooling the single thermoplastic unit so that its hardened surface makes agglomeration impossible, also in the hypothes in which we harden the surface of a thermoplastic granule and make the extruded materials not agglomerate, not cooling their superficial layer (by air, gas or other liquid) but powdering their sur faces with fit materials until the single units do not stick between them. In this way we exploit the whole heat contained inside the hand-manufactured article, for its following drying process or de-humididification.

5) We claim this procedure also in the hypothesis in which the "powdering" with fit powder is obtained with air puffs containing the same powder with powder spouts, separated from air puffs or inverting the order of powdering, and blowing between them.

6) We claim this procedure in the hypothesis in which a previous cooling of the material is obtained spraying or dipping it in water or steam and afterwards the hot granule is in anyway powdered with separating mineral or plastic powder, also in the hypothesis in which the separation between the granules is obtained instead of powder,through particles, chips or little pearls of any form and dimension fit to obtained the appointed aim.

7) Our present invention involves a devices, to be put on the head of the extruder, fit to strewn with "powder" the extruded material in anyway, at the same time as it comes out.

8) We claim as we have stated at the previous points, our present invention with any kind of material to be powdered on the granule, to make it not stick.

9) We claim our present invention, as we have stated at the previous points also in the hypothesis in which the powdering is made through colouring matter,in fact, this device allows a new technique of colouring and/or addition of thermoplastics .

10) We claim our present invention, as we have stated at the

**0236657**

previous points, also in the hypothesis in which the powdering is made with many different kinds of powder contempora-neously or cyclically used.